# EUROPÄISCHE PATENTSCHRIFT

(11) **EP 1 662 191 B1**
(45) Veröffentlichungstag und Bekanntmachung des Hinweises auf die Patenterteilung: **01.08.2007**
(21) Anmeldenummer: 05023610.8
(22) Anmeldetag: 28.10.2005
(51) Int. Cl.: F16L 27/08, B22D 11/128

(54) **Drehdurchführung**
Rotary passage
Passage tournant

(30) Priorität: 24.11.2004 DE 102004056818
(43) Veröffentlichungstag der Anmeldung: 31.05.2006
(73) Patentinhaber: Deublin GmbH, 65719 Hofheim-Wallau (DE)
(72) Erfinder: Huhn, Hans-Jörg, 55130 Mainz (DE); Wolf, Charles, 65719 Hofheim (DE)
(74) Vertreter: Mergel, Volker

(56) Entgegenhaltungen:
- EP-A- 0 519 904
- EP-A- 0 983 811
- EP-A- 1 048 880
- AT-B- 400 173
- DE-U1- 29 609 023
- US-A- 3 129 960

## Beschreibung

Die Erfindung bezieht sich auf eine Drehdurchführung zur Zufuhr und/oder Abfuhr von Medium in einen axialen Hohlraum eines sich drehenden Maschinenteils, insbesondere einer gekühlten Walze oder Rolle.

Derartige Drehdurchführungen sind aus der EP 0 519 904 B1, der AT 400 173 B sowie der EP 1 048 880 B1 bekannt. Die Drehdurchführung umfasst generell einen gerätefesten, sich nicht drehenden Durchführungsteil und einen sich mit dem drehenden Maschinenteil drehenden Durchführungsteil, wobei Dichtmittel zwischen dem gerätefesten und dem sich drehenden Durchführungsteil angeordnet sind. Eine solche Drehdurchführung wird zur Versorgung von Walzen oder Rollen mit Kühlmittel benutzt, die gewissermaßen Achsen oder Wellen darstellen, welche an ihren Enden über Lager gestützt werden. Unter der schweren Last erleiden diese sich drehenden Maschinenteile eine gewisse Achsdurchbiegung, was zu sogenannten Winkelfehlern an den Achs- oder Wellenenden führt. Der Winkelfehler bedeutet eine Verschiebung und Kippung der radialen Endfläche des sich drehenden Maschinenteils und damit auch des sich drehenden Durchführungsteils, wenn dieses starr mit dem sich drehenden Maschinenteil verbunden ist. Dies führt zu Abdichtungsproblemen.

Die EP 0 519 904 B1 zeigt drei Ausführungsformen, um den Winkelfehler unschädlich zu machen. In der ersten Ausführungsform sind die Dichtmittel zwischen dem gerätefesten und dem sich drehenden Durchführungsteil gemäß einer Ringkugelfläche ausgebildet, deren Mittelpunkt annähernd um den Schwenkmittelpunkt des Lagers der Achse oder Welle angeordnet ist. In der zweiten Ausführungsform kann das sich drehende Durchführungsteil um den Schwenkmittelpunkt des Lagers relativ zu dem Achsende schwenken, wobei in dem axialen Hohlraum des Achsendes ein Hohlraumeinsatz mit Ringkugelfläche vorgesehen ist, die mit einer entsprechenden Ringkugelfläche des sich drehenden Durchführungsteils zusammenarbeitet. Der Mittelpunkt dieser Kugelflächen liegt wiederum annähernd im Schwenkmittelpunkt des Lagers. Bei der dritten Ausführungsform ist der sich drehende Durchführungsteil als zylindrische Buchse ausgebildet, welche den axialen Hohlraum des Achsendes bei der Mittelebene des Lagers auskleidet, und der gerätefeste Durchführungsteil reicht mit einem rohrförmigen Fortsatz, der einen O-Ring trägt, bis zu dieser Mittelebene des Lagers. An dieser Mittelebene des Lagers finden keine radialen Verschiebungen statt, wenn es zu Winkelfehlern des Achsendes kommt. Während die beiden erstgenannten Ausführungsformen eine gute Abdichtwirkung erwarten lassen, ist ihre Realisierung teuer, weil spezielle, auf einander angepasste Kugelflächen benötigt werden. Die dritte Ausführungsform benutzt einen O-Ring, gegen den sich die Gegenfläche relativ dreht und der schwenkt. Ein O-Ring gilt nicht als besonders verschleißfest unter dieser doppelten Beanspruchung.

Der Erfindung liegt die Aufgabe zugrunde, eine Drehdurchführung zu schaffen, die gegenüber Achsendschwenkungen des sich drehenden Maschinenteils tolerant ist, eine hohe Lebensdauer erwarten lässt und relativ preiswert herzustellen ist.

Die gestellte Aufgabe wird aufgrund der Merkmale des Anspruches 1 gelöst. Im einzelnen gibt es eine Buchse als Hohlraumeinsatz für den axialen Hohlraum des sich drehenden Maschinenteils, wobei die Außenseite der Buchse dem axialen Hohlraum angepasst ist und die Innenseite der Buchse ballig ausgeführt ist. Der sich drehende Durchführungsteil ist als Hülse mit einem Außendurchmesser passend zu dem kleinsten Durchmesser der balligen Innenseite der Buchse ausgebildet. Die Dichtmittel zwischen dem gerätefesten und dem sich drehenden Durchführungsteil sind in einer radialen Ebene zur Achse des sich drehenden Maschinenteils wirksam und können sich gegeneinander verschieben, während sie sich gleichzeitig relativ zueinander drehen. Wenn bei starker Belastung sich das drehende Maschinenteil durchbiegt und das Achsende schwenkt, kann der sich drehende Durchführungsteil auf der balligen Innenseite der Buchse um den Betrag des Winkelfehlers abrollen, so dass der sich drehende Durchführungsteil achsparallel bleibt und es zu keinem Verkanten der Dichtmittel in der radialen Dichtebene kommt. Somit ist eine gleichbleibend gute Dichtwirkung in der radialen Dichtebene zu erwarten.

Zur Abdichtung zwischen dem sich drehenden Durchführungsteil und der Buchse, die sich ebenfalls mit dem sich drehenden Maschinenteil mitdreht, ist auf der balligen Innenseite an der engsten Stelle der Buchse eine ringförmige Dichtung vorgesehen, die mit dem Außenumfang der Hülse des sich drehenden Durchführungsteils zusammenarbeitet. Die ringförmige Dichtung ragt etwas über die ballige Innenseite der Buchse vor, und zwar so, dass sich die Hülse auf der ringförmigen Dichtung abwälzen kann, wenn es zu dem Winkelfehler am Achsende des sich drehenden Maschinenteils kommt, wobei die Zusammenpressung der Dichtung zur Abdichtwirkung zwischen dem sich drehenden Maschinenteil und der sich ebenfalls drehenden Buchse kommt.

Um eine kompakte Bauweise zu erzielen, wird die Dichtung an der engsten Stelle der Buchse möglichst nahe zu den Dichtmitteln zwischen dem gerätefesten und dem sich drehenden Durchführungsteil angeordnet, d.h. entfernt von der Mittelebene des Lagers, in welcher der Schwenkmittelpunkt des Lagers liegt, das das Achsende lagert.

Weitere Einzelheiten der Erfindung werden anhand zweier Ausführungsbeispiele beschrieben. Dabei zeigt:
- Fig. 1: einen Längsschnitt durch eine erste Drehdurchführung, eingebaut in dem gelagerten Achsende einer Walze oder Rolle,
- Fig. 2: eine vergrößerte Darstellung der Drehdurchführung,
- Fig. 3: eine vergrößerte Einzelheit, und
- Fig. 4: einen Längsschnitt durch eine zweite Drehdurchführung.

Die hauptsächlichsten Teile der Drehdurchführung sind ein gerätefester, sich nicht drehender Durchführungsteil 1, ein sich um die Achse 8 drehender Durchführungsteil 2, Dichtmittel 3 zwischen diesen Durchführungsteilen 1, 2 und ein Hohlraumeinsatz 4. Die Drehdurchführung ist in einem sich drehenden Maschinenteil 5, hier eine Walze oder Rolle, eingebaut und wird von einem Lagerdeckel 6 abgedeckt, der abgedichtet in einem Lagerbock 7 eingefügt ist. Der Lagerbock 7 weist einen Hohlraum 70 zur Aufnahme von Lagern 71 und von Lippendichtungen 72 auf, ferner sind Versorgunskanäle 73 und Leckageableitungen 74 vorgesehen. Die Walze oder Rolle 5 weist einen axialen Hohlraum 50 auf, über den die Walze oder Rolle gekühlt werden soll. Die Enden der Walze oder Rolle sind als Achsenden 51 ausgebildet, die in den Lagern 71, beispielsweise Pendelrollenlager 71 abgestützt werden, die eine gewisse Schwenkung des Achsendes 51 um den Schwenkmittelpunkt 75 des Lagers 71 zulassen, der in der Mittelebene 76 der Lager 71 liegt. Die Lager 71 werden durch die Lippendichtungen 72 gegen eindringendes Medium geschützt. Der Deckel 6 weist einen Hohlraum 60 zur Aufnahme des gerätefesten Durchführungsteils 1 und eine Versorgungsöffnung 63 auf, um Medium, insbesondere Kühlflüssigkeit zuzuführen oder abzuführen.

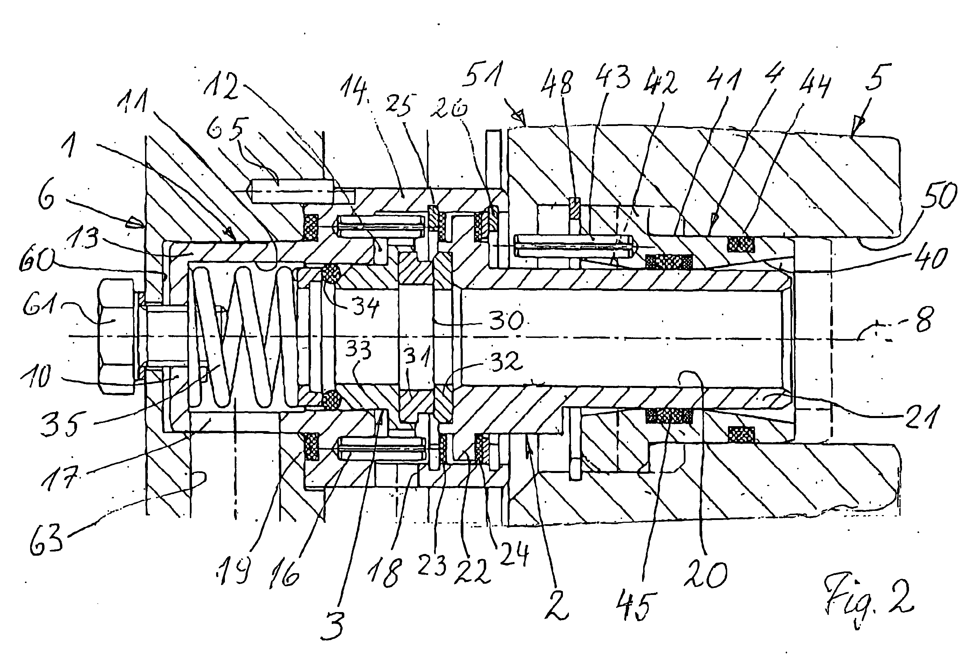

Der gerätefeste Durchführungsteil 1 umfasst ein Gehäuse 10 (Fig. 2) mit einem kleineren zylindrischen Innenraum 11 und einem größeren zylindrischen Innenraum 12, die durch rohrförmige Gehäuseteile 13, 14 gebildet werden. Der kleinere Innenraum 11 steht über eine Versorgungsöffnung 17 mit den versvrgungskanälen 63, 73 in Verbindung und der größere Innenraum 12 über eine Leckageabfuhröffnung 18 mit der Leckageableitung 74. Ein Dichtungsträger 33 wird durch den zylindrischen Innenraum 11 geführt und eine Spalt-Abdichteinrichtung 34 wird mittels einer Feder 35 an eine Schrägfläche des Dichtungsträgers 33 angepresst, um den Spalt zwischen Dichtungsträger 33 und dem Gehäuse 10 abzudichten. Der Dichtungsträger 33 weist einen Flansch mit randständigen Aussparungen auf, durch welche sich Spannhülsen 16 erstrecken, die in der Gehäusewandung 10 verankert sind. Auf diese Weise kann sich der Dichtungsträger 33 parallel zur Richtung der Achse 8 verschieben, wird jedoch gegen Drehung von den freien Enden der Spannhülsen 16 gehalten. An seinem axial inneren Ende trägt der Dichtungsträger 33 einen Einsatzring 31, der entlang einer radialen Abdichtebene 30 an einem zweiten Einsatzring 32 gleitet. Die Einsatz- oder Gleitringe 31, 32 bestehen vorzugsweise aus einem keramischen Werkstoff, z.B. Siliziumkarbid und bilden zusammen mit den Teilen 33, 34, 35 die Dichtmittel 3 zwischen dem gerätefesten Durchführungsteil 1 und dem sich drehenden Durchführungsteil 2.

Der sich drehende Durchführungsteil 2 weist einen Innenhohlraum 20 auf, der sich im übrigen durch entsprechende Hohlräume in den Gleitringen 31, 32 und dem Dichtungsträger 33 sowie der Abdichteinrichtung 34 bis in den kleineren Innenraum 11 des gerätefesten Durchführungsteils 1 fortsetzt. Aufgebaut wird der sich drehende Durchführungsteil 2 aus einer Hülse 21 und einem Flansch 22. Der Flansch 22 ist zwischen zwei Anlaufscheiben 23, 24 gefangen, die aus reibungsarmem Material bestehen und sich an Sicherungsringen 25, 26 abstützen, die als Sprengringe in Nuten des Gehäuses 10 eingreifen. Auf diese Weise ist der sich drehende Durchführungsteil 2 in axialer Richtung an dem gerätefesten Durchführungsteil 1 gekoppelt, kann sich jedoch gegenüber dem gerätefesten Teil drehen. Die Kopplung ist wegen der Montage der Drehdurchführung wichtig, da auf diese Weise die empfindlichen Dichtungsmittel 3 beim Einbau der Drehdurchführung abgekapselt bleiben und die Gefahr des Eintrags von Schmutz vermieden wird.

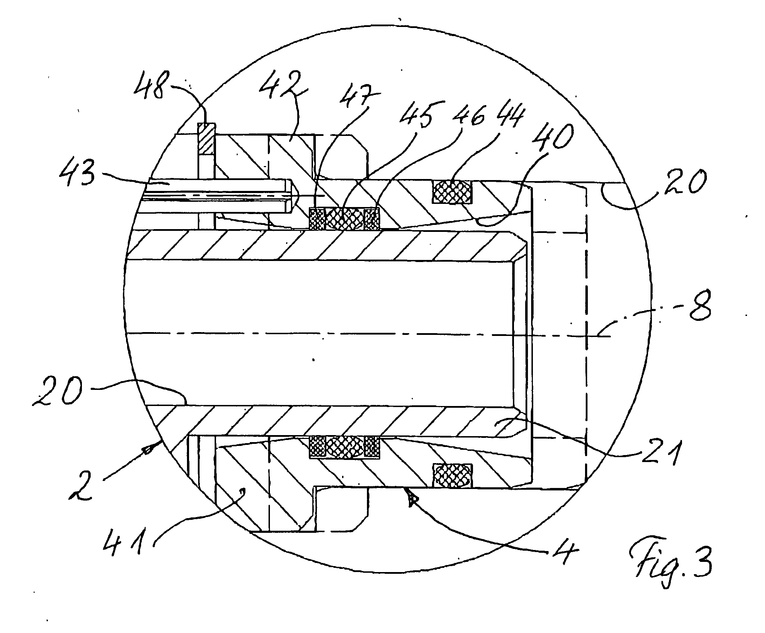

Der Hohlraumeinsatz 4 weist eine Buchse 41 mit balliger Innenseite 40 und einer zylindrischen Außenseite auf, die dem örtlichen Innendurchmesser des axialen Hohlraums 50 entspricht. Ferner ist ein Flansch 42 vorhanden, der zur axialen Aufnahme einer Spannhülse 43 dient, deren freies Ende in eine Nut des stufig ausgebildeten Flansches 22 eingreift, um das Durchführungsteil 2 in Umdrehungsrichtung mit dem Hohlraumeinsatz 4 zu koppeln. Der Hohlraumeinsatz 4 weist am Außenumfang eine Ringdichtung 44 und an der engsten Stelle seiner balligen Innenseite eine ringförmige Dichtung 45 auf, die mit dem Außenumfang der Hülse 21 zusammenwirkt. Die Dichtung 45 kann zwei Stützringe 46, 47 (Fig. 3) aufweisen, deren Material (z.B. Polytetrafluorethylen PTFE) fester ist als das der Dichtung 45. Der Hohlraumeinsatz 4 wird in geeigneter Weise in dem axialen Hohlraum 50 gehalten, beispielsweise über einen Sprengring 48.

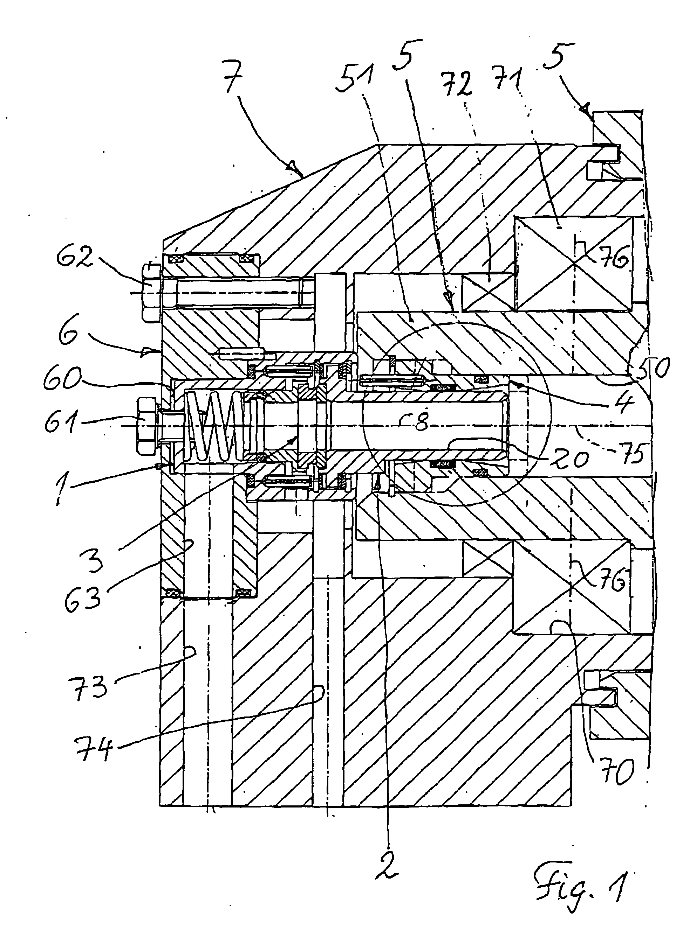

Der Deckel 6 wird mit Schrauben 62 am Lagerbock 7 (Fig. 1) gehalten. Der Ein- und Ausbau der Drehdurchführung erfolgt bei entferntem Deckel 6. Dadurch wird freier Zugang zu dem Achsende 51 und dem dort beginnenden axialen Hohlraum 50 gewährt. Es können der gerätefeste Durchführungsteil 1 und der sich drehende Durchführungsteil 2 als Baueinheit unter Einschluss der Dichtmittel 3 montiert oder demontiert werden, wobei sich die Dichtmittel im eingekapselten Zustand befinden. Es versteht sich, dass bei der Erstmontage der Hohlraumeinsatz 4 als erster montiert worden ist bzw. bei der Demontage als letzter demontiert wird.

Zur axialen Festlegung des gerätefesten Durchführungsteils 1 in dem Hohlraum 60 des Deckels 6 dient eine Schraube 61, mit der das Gehäuse 10, welche zwischen den rohrförmigen Gehäuseteilen 13, 14 eine Schulter und eine darin angebrachte Dichtung 19 aufweist, gegen den Deckel 6 gezogen wird. Ein Stift 65 verhindert die Drehung des Gehäuses 10.

Im Betrieb wird Medium, insbesondere Kühlflüssigkeit, über die Kanäle 73, 63 der Drehdurchführung zugeführt bzw. aus dieser abgeführt. Das Medium durchströmt die axialen Hohlräume, wobei eine gute Abdichtung an der kritischen radialen Dichtebene 30 erfolgt, auch nach längerem Betrieb. Die Einsatzringe 31, 32 schleifen sich gegenseitig ein ("ergeben ein Laufbild") und bleiben somit sehr lange dicht. Unterschiedliche Wärmedehnung der Teile werden ohne weiteres ausgeglichen, insbesondere zwischen der Hülse 21 und der Buchse 41. Die Dichtungen 14, 19 und 44 werden nur statisch belastet und verschleißen somit nicht. Die dynamische Belastung der Dichtung 45 ist nur gering, da nur die geringen Winkelbewegungen der Achsenden 51 bewältigt werden brauchen. Deshalb ist der Verschleiß dieser Dichtung 45 als gering anzusetzen. Andererseits ermöglicht die Dichtung 45 eine Entkopplung der Schwenkbewegung des Achsendes 51 von dem sich drehenden Durchführungsteil 2, so dass dieses die Schwenkbewegungen des Achsendes 51 nicht mitmacht und die Dichtung 32 ohne Kippen in enger Anlage an der Dichtung 31 angepresst bleibt.

Die Drehdurchführung des ersten Ausführungsbeispiels kann abgewandelt werden, um die Zufuhr und Abfuhr von Medium gleichzeitig an einem Achsende zu bewerkstelligen. In diesem Fall wird das Gehäuse 10 abgewandelt, so dass es einen Versorgungskopf mit einem radialen Zulauf und einem radialen Ablauf aufweist, die durch ein Syphonrohr voneinander getrennt sind, das sich durch das Innere der Drehdurchführung erstreckt. Wenn die Zufuhr des Mediums über das Rohrinnere erfolgt, erfolgt die Abfuhr über den Ringraum zwischen Rohräußerem und der Innenwand der Drehdurchführung.

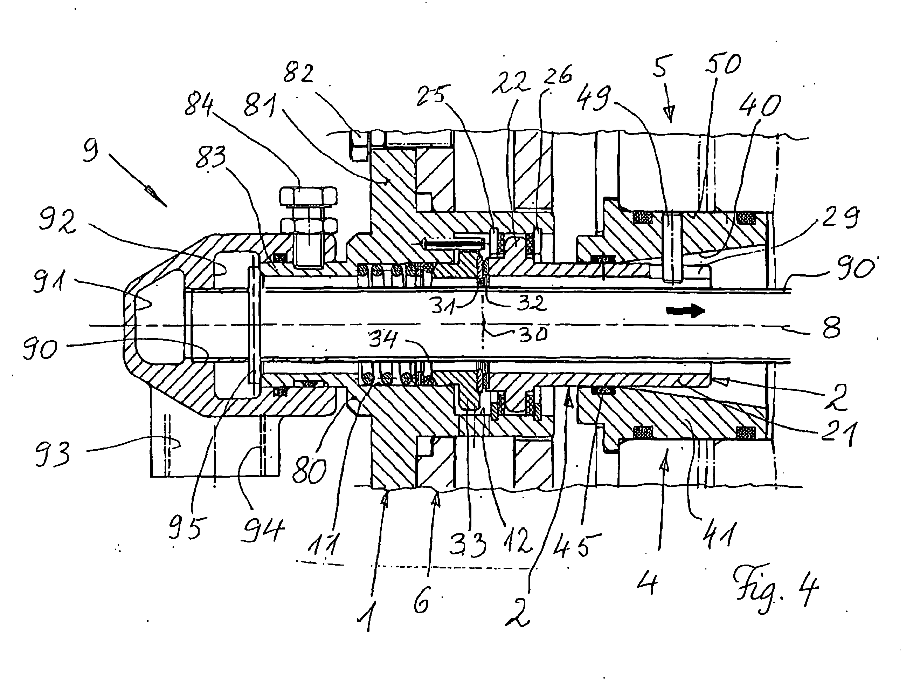

Eine weitere Abwandlung betrifft die Anordnung der Dichtung 45 an der engsten Stelle der balligen Innenseite 40 der Buchse 4 relativ zu der Mittelebene 76 des Lagers 71. Indem die Spannhülse 43 fortgelassen wird und die Buchse 4 insgesamt näher zu dem Flansch 22 gerückt wird, kann die Dichtung 45 weiter weg von der Mittelebene 76 des Lagers 71 angeordnet werden, was zu einer kürzeren Baulänge der Drehdurchführung führt. Die Kopplung der Hülse 21 an die Buchse 4 erfolgt dann über einen radialen Stift 49, wie noch bei Fig. 4 beschrieben wird.

Fig. 4 zeigt das zweite Ausführungsbeispiel einer Drehdurchführung, die sich von dem ersten Ausführungsbeispiel dadurch unterscheidet, dass es einen Versorgungskopf 9 aufweist, der außerhalb des Deckels 6 angeordnet ist, der das Achsende des nicht dargestellten Lagerblocks verschließt. Sich entsprechende Teile werden in den beiden Ausführungsbeispielen mit den gleichen Bezugsziffern belegt. Der gerätefeste Durchführungsteil 1 umfasst ein Gehäuse 80 mit einem Flansch 81, der mittels Schrauben 82 an dem Deckel 6 befestigt ist. Das Gehäuse 80 weist ferner einen rohrförmigen Fortsatz 83 auf, auf dem der Versorgungskopf 9 mittels Schrauben 84 festgeklemmt ist. Der Versorgungskopf 9 weist im Inneren einen Mediumvorlaufraum 91 und einen Mediumrücklaufraum 92 auf, die über ein Syphonrohr 90 voneinander getrennt sind. Ferner sind winkelmäßig gegeneinander versetzt ein Mediumzuführungskanal 93 und ein Mediumabführungskanal 94 vorgesehen. Das Syphonrohr 90 ist in der Bohrung zwischen den beiden Räumen 91, 92 festgeklemmt und stützt sich außerdem mittels eines Querstiftes 95 am Ende des rohrförmigen Fortsatzes 83 ab.

Ferner ist der Hohlraumeinsatz 4 etwas abgewandelt und ragt über den sich drehenden Maschinenteil 5 heraus.
Die Ringdichtung 45 ist nahe des äußeren Randes des Hohlraumeinsatzes 4 angeordnet, befindet sich somit nicht in einer Ebene, in welcher der Schwenkmittelpunkt des Lagers annähernd liegt. Diese Anordnung kann dadurch erreicht werden, dass die Kopplung des Hohlraumeinsatzes 4 mit dem sich drehenden Durchführungsteil 2 über den sich radial erstreckenden Stift 49 erfolgt, der sich in einen Schlitz 29 der Hülse 21 hinein erstreckt. In sonstiger Hinsicht entsprechen sich die beiden Ausführungsbeispiele der Drehdurchführung, so dass sich eine Detailbeschreibung erübrigt.

Wenn im Betrieb das sich drehende Maschinenteil 5 Winkelfehlern unterliegt und der Hohlraumeinsatz 4 gegenüber der Achse 8 leicht schwenkt, wird der sich drehende Durchführungsteil 2 gegenüber dem Dichtungsträger 33 des ortsfesten Durchführungsteils 1 leicht angehoben, so dass sich die Gleitringe 31, 32 entlang der Abdichtebene 30 etwas gegeneinander verschieben, während sie gleichzeitig relativ zueinander rotieren. Infolge der möglichen Abwälzbewegung der Hülse 21 auf der balligen Innenseite 40 des Hohlraumeinsatzes 4 kommt es jedoch zu keinem Verkanten der Gleitringe 31, 32 zueinander.

Die erfindungsgemäße Drehdurchführung ist insbesondere zur Zufuhr und/oder Abfuhr von Medien geeignet, wenn das sich drehende Maschinenteil in Betrieb Verformungen unterliegt. Bei solchen kritischen Anwendungsfällen bleibt die gute Abdichtungswirkung in der radialen Abdichtungsebene erhalten, weil trotz Schwenkung der Achsenden das Verkannten der Dichtmittel in der radialen Dichtebene vermieden wird.

## Patentansprüche

1. Drehdurchführung zur Zufuhr und/oder Abfuhr von Medium in bzw. aus einem axialen Hohlraum (50) eines sich drehenden ein Achsende (51) aufweisenden Maschinenteils (5), umfassend:
einen gerätefesten, sich nicht drehenden Durchführungsteil (1),
einen sich drehenden Durchführungsteil (2), Dichtmittel (3), die in einer radialen Dichtebene (30) zwischen dem sich drehenden Durchführungsteil (2) und dem gerätefesten Durchführungsteil (1) wirksam sind, und
einen Hohlraumeinsatz (4) in dem axialen Hohlraum (50) des sich drehenden Maschinenteils (5), wobei das sich drehende.Maschinenteil (5) über Lager (71) gestützt wird, die eine gewisse Schwenkung des Achsendes (51) zulassen, **gekennzeichnet durch** folgende Merkmale:
der Hohlraumeinsatz (4) ist als Buchse (41) mit einer dem axialen Hohlraum (50) angepassten Außenseite und mit einer balligen Innenseite (40) ausgebildet;
der sich drehende Durchführungsteil (2) ist als Hülse (21) mit einem Außendurchmesser passend zu dem kleinsten Durchmesser der balligen Innenseite (40) der Buchse (41) ausgebildet.

2. Drehdurchführung nach Anspruch 1,
**dadurch gekennzeichnet, dass** die Buchse (41) an ihrer balligen Innenseite (40) eine ringförmige Dichtung (45) aufweist, die mit dem Außenumfang der Hülse (21) zusammenwirkt.

3. Drehdurchführung nach Anspruch 1 oder 2,
**dadurch gekennzeichnet,**
**dass** die ringförmige Dichtung (45)nahe des äußeren Endes der Buchse (4) angeordnet ist und
**dass** die Buchse (41) über einen Stift (49) das sich drehende Durchführungsteil (2) in der Drehbewegung mitnimmt, jedoch dessen Schwenkung zulässt.

4. Drehdurchführung nach einem der Ansprüche 1 bis 3,
**dadurch gekennzeichnet, dass** die Dichtmittel (3) einen ersten Einsatzring (31) an dem gerätefesten Durchführungsteil (1) und einen zweiten Einsatzring (32) an dem sich drehenden Durchführungsteil (2) aufweisen.

5. Drehdurchführung nach einem der Ansprüche 1 bis 4,
**dadurch gekennzeichnet, dass** der gerätefeste Durchführungsteil (1) ein Gehäuseteil (10, 80) mit einem ersten kleineren und einem zweiten größeren zylindrischen Innenraum (11, 12) und einen Dichtungsträger (33) aufweist, der in den beiden zylindrischen Innenräumen (11, 12) geführt ist, um die Dichtmittel (3) aufeinander zu führen.

6. Drehdurchführung nach Anspruch 5,
**dadurch gekennzeichnet, dass** das Gehäuseteil (10, 80) in seinem größeren zylindrischen Innenraum (12) einen Flansch (22) der Hülse (21) des sich drehenden Durchführungsteils (2) aufnimmt, der zwischen zwei Anlaufscheiben (23, 24) gefangen ist, die am Gehäuseteil (10) befestigt sind und aus reibungsarmem Material bestehen.

7. Drehdurchführung nach Anspruch 6,
**dadurch gekennzeichnet, dass** die Befestigung der Anlaufscheiben (23, 24) mittels Sicherungsringen (25, 26) erfolgt.

8. Drehdurchführung nach einem der Ansprüche 5 bis 7,
**dadurch gekennzeichnet, dass** der Dichtungsträger (33) unter Federspannung (15) steht.

9. Drehdurchführung nach einem der Ansprüche 5 bis 8,
**dadurch gekennzeichnet, dass** das Gehäuseteil (10) eine Versorgungsöffnung (17) und eine Leckageabfuhröffnung (18) aufweist.

10. Drehdurchführung nach einem der Ansprüche 5 bis 9,
**dadurch gekennzeichnet, dass** das Gehäuseteil einen Versorgungskopf (9) mit Mediumzufuhreinrichtungen (91, 93) und mit Mediumabführeinrichtungen (92, 94) aufweist, die von einem Syphonrohr (90) getrennt sind, das sich in den axialen Hohlraum (50) des sich drehenden Maschinenteils (2) hinein erstreckt.

## Claims

1. A rotary joint for feeding and / or discharging medium into or from an axial hollow space (50) of a rotating machine part (5) comprising an axle end (51), including a stationary, non-rotating passage part (1), a rotating passage part (2),
sealing means (3) which are effective in a radial sealing plane (30) between the rotating passage part (2) and the stationary passage part (1), and
a hollow insert (4) in the axial hollow space (50) of the rotating machine part (5), whereby the rotating machine part (5) is supported by means of bearings (71) which allow a certain pivoting of the axis end (51),
**characterised by** the following features:
the hollow insert (4) is formed as a bushing (41) with an outer side adapted to the axial hollow space (50) and with a spherical inner side (40);
the rotating passage part (2) is formed as a sleeve (21) with an outer diameter adapted to the smallest diameter of the spherical inner side (40) of the bushing (41).

2. The rotary joint according to claim 1,
**characterised in that** the bushing (41) comprises on its spherical inner side (40) an annular seal (45) which cooperates with the outer periphery of the sleeve (21).

3. The rotary joint according to claim 1 or 2,
**characterised in that** the annular seal (45) is arranged close to the outer end of the bushing (41) and **in that** the bushing (41) takes the rotating passage part (2) with it in rotational movement by means of a pin (49), but allows it to pivot.

4. The rotary joint according to one of the claims 1 to 3,
**characterised in that** the sealing means (3) comprise a first insert ring (31) on the stationary passage part (1) and a second insert ring (32) on the rotating passagepart (2).

5. The rotary joint according to one of the claims 1 to 4,
**characterised in that** the stationary passage part (1) comprises a housing part (10, 80) with a first maller and a second larger cylindrical inner space (11, 12) and a seal carrier (33) which is guided within the two cylindrical inner spaces (11, 12) in order to bring the sealing means (3) towards each other.

6. The rotary joint according to claim 5,
**characterised in that** the housing part (10, 80) receives in its larger cylindrical inner space (12) a flange (22) of the sleeve (21) of the rotating passage part (2) which is held between two thrust washers (23, 24) which are fixed to the housing part (10) and consist of low-friction material.

7. The rotary joint according to claim 6, **characterised in that** the thrust washers (23, 24) are 30 fixed by means of retaining rings (25, 26).

8. The rotary joint according to one of the claims 5 to 7,
**characterised in that** the seal carrier (33) is under spring tension (15).

9. The rotary joint according to one of the claims 5 to 8,
**characterised in that** the housing part (10) comprises a feed opening (17) and a leakage discharge opening (18).

10. The rotary joint according to one of the claims 5 to 9,
**characterised in that** the housing part comprises a feed head (9) with medium feed devices (91, 93) and with medium discharge devices (92, 94) which are separated by a siphon pipe (90) which extends into the axial hollow space (50) of the rotating machine part (2).

## Revendications

1. Passage tournant pour l'arrivée et/ou l'évacuation de fluide dans, ou selon le cas, à partir d'une cavité (50) axiale d'une partie de machine (5) tournant et présentant une extrémité d'axe (51), comprenant :
- une partie de passage (1) solidaire de l'appareil et non rotative,
- une partie de passage (2) rotative,
- des moyens d'étanchéité (3), qui sont efficaces dans un plan d'étanchéité (30) radial entre la partie de passage (2) rotative et la partie de passage (1) solidaire de l'appareil, et
- une insertion de cavité (4) dans la cavité (50) axiale de la partie de la machine (5) rotative, la partie de machine (5) rotative étant soutenue au moyen de paliers (71) qui autorisent un certain basculement de l'extrémité d'axe (51),
**caractérisé par** les caractéristiques suivantes :
l'insertion de cavité (4) est conçue comme douille (41) avec un côté extérieur adapté à la cavité (50) axiale et avec un côté intérieur (40) bombé ;
la partie de passage (2) rotative est conçue comme douille (21) avec un diamètre extérieur adapté au plus petit diamètre du côté intérieur (40) bombé de la douille (41).

2. Passage tournant selon la revendication 1,
**caractérisé en ce que** la douille (41) présente sur son côté intérieur (40) bombé un joint (45) annulaire qui agit conjointement avec le pourtour extérieur de la douille (21).

3. Passage tournant selon les revendications 1 ou 2,
**caractérisé en ce que** :
le joint (45) annulaire est disposé à proximité de l'extrémité extérieure de la douille (4), et
**en ce que** la douille (41) entraîne par une broche (49) la partie de passage (2) rotative dans le mouvement de rotation, mais autorise son basculement.

4. Passage tournant selon l'une quelconque des revendication 1 à 3, **caractérisé en ce que** les moyens d'étanchéité (3) présentent une première bague d'insertion (31) sur la partie de passage (1) solidaire de l'appareil et une seconde bague d'insertion (32) sur la partie de passage (2) rotative.

5. Passage tournant selon l'une quelconque des revendications 1 à 4, **caractérisé en ce que** la partie de passage (1) solidaire de l'appareil présente une partie de boîtier (10, 80) avec un premier espace intérieur plus petit et un second espace intérieur (11, 12) plus grand et cylindrique et un support d'étanchéité (33), qui est guidé dans les deux espaces intérieurs (11, 12) cylindriques afin de guider les moyens d'étanchéité (3) les uns vers les autres.

6. Passage tournant selon la revendication 5,
**caractérisé en ce que** la partie de boîtier (10, 80) reçoit dans son espace intérieur (12) cylindrique et plus grand une bride (22) de la douille (21) de la partie de passage (2) rotative, qui est réceptionnée entre deux rondelles de butée (23, 24), lesquelles sont fixées sur la partie de boîtier (10) et sont à base de matériau peu sujet au frottement.

7. Passage tournant selon la revendication 6,
**caractérisé en ce que** la fixation des rondelles de butée (23, 24) s'effectue au moyen de bagues de blocage (25, 26).

8. Passage tournant selon l'une quelconque des revendications 5 à 7, **caractérisé en ce que** le support d'étanchéité (33) se trouve sous tension de ressort (15).

9. Passage tournant selon l'une quelconque des revendications 5 à 8, **caractérisé en ce que** la partie de boîtier (10) présente une ouverture d'alimentation (17) et une ouverture pour l'évacuation des fuites (18).

10. Passage tournant selon l'une quelconque des revendications 5 à 9,
**caractérisé en ce que** la partie de boîtier présente une tête d'alimentation (9) avec dispositifs d'arrivée de fluide (91, 93) et avec dispositifs d'évacuation de fluide (92, 94), qui sont séparés par un tuyau de siphon (90) qui s'étend à l'intérieur de la cavité (50) axiale de la partie de machine (5) rotative.
